# DEMANDE DE BREVET EUROPEEN

(11) **EP 2 320 155 A1**
(43) Date de publication de la demande: **11.05.2011**
(21) Numéro de dépôt: 10405210.5
(22) Date de dépôt: 04.11.2010
(51) Int. Cl.: F24J 2/24, F24J 2/04, F24J 2/46, F24J 2/26

(54) **Toit énergétique à pans**

(30) Priorité: 07.11.2009 CH 17102009
(71) Demandeur: Brazzola, Luigi, 6874 Castel S. Pietro (CH)
(72) Inventeur: Brazzola, Luigi, 6874 Castel S. Pietro (CH)

(57) **Abrégé**

L'invention concerne un toit énergétique à pans capable d'absorber la chaleur de l'environnement.

Le toit énergétique est composé par des panneaux de préférence à "sandwich" composés par une tôle de couverture nervurée (1) et par une plaque rigide (3) enfermant une couche de matériel isolant thermiquement (2) **et** par un où plusieurs conduits tubulaires droits (5) où à serpentin (4) dans lesquels s'écoule un fluide termovecteur. Préférablement les conduits tubulaires (4 e 5) sont placés directement sur la tôle nervurée de couverture (1) et rangés entre les grandes nervures (10).

La nouveauté de l'invention consiste dans le fait que les conduits tubulaires sont tout-le-temps et directement exposés au soleil et aux autres sources de chaleur latente.

Au dessus des conduits tubulaires peut être positionné un filet sombre à maille fine (6) qui, en combinaison avec les traverses (7), confères au toit énergétique l'aspect d'un toit usuel avec des tuiles, en outre le toit entier peut être recouvert par une pellicule enroulable.

## Description

Le toit énergétique à pans inventé est composé par un où plusieurs panneaux de toiture formée par deux tôles dont la supérieure est nervurée, enfermant une couche de mousse thermiquement isolante et une ou plusieurs conduites tubulaires dans lequel coule un fluide thermovecteur, placé sur ces panneaux de toiture. De préférence les conduits tubulaires sont placés directement sur le dessus des panneaux de toiture, disposées entre les nervures et protégée par un filet à mailles fines. La nouveauté de l'invention consiste dans une combinaison de panneaux multicouches avec des conduits tubulaires et dans le fait que le où les conduits tubulaires sont tout-le-temps et directement exposés au soleil et aux autres sources de chaleur latente raison pour laquelle le toit thermique absorbe constamment la chaleur de chaque source de chaleur disponible et au même temps il remplit la fonction d'un vrai toit.

### Etat de la technique

Les panneaux solaires utilisés actuellement, si on fait abstraction du fait qu'ils peuvent produire de l'électricité, présentent toute une série d'importants désavantages:
- Rendement réduit et surtout incapacité de produire de l'énergie dans l'absence d'insolation, c'est-à-dire incapacité de récupérer l'énergie latente dans l'environnement, par exemple dans l'eau de la pluie, dans le vent, dans le brouillard et dans la neige, etc. Pour cette raison les panneaux actuels ne sont pas capables de puiser de l'énergie depuis ces sources qui sont présentes surtout en hiver et les jours de mauvais temps quand l'approvisionnement énergétique est de grande importance. En plus il existe la nécessité de protéger les panneaux solaires des sollicitations mécaniques comme la grêle où les objets portés par le vent. Comme exemple nous mentionnons le brevet EP-1757873 qui bien décrit ces problématiques
- Un problème est l'effet esthétique, surtout si les panneaux solaires sont posés sur les toits de bâtiments existants où dans les centres historiques.
- La durée des parties composantes est limitée dans le temps, en particulier des cellules photovoltaïques et des garnitures et/où des scellures, ce qui rend ces solutions économiquement peu intéressantes.

Le toit énergétique à absorption de chaleur par moyen d'un fluide circulant dans un tuyau est connu depuis longtemps (brevet **CH 619770** intitulé "Panneau absorbent l'énergie solaire et son utilisation pour couvrir un toit à pans") et il est déjà commercialisé sur grande échelle par la maison Elioform.

L'état de la technique est aussi exemplifié par les brevets EP-0864824, WO 2005/042872, WO 2006/121345.

Le panneau objet du brevet **CH 619770** permettait déjà un meilleur rendement parce-que avec la pompe à chaleur on pouvait absorber l'énergie calorique présente dans l'environnement soit pendant le jour soit pendant la nuit, en été comme en hiver.

Aussi du point de vue esthétique (toit complet et semblable à un toit couvert de tuiles traditionnelles), de la durée et du entretien cette solution était meilleure des panneaux thermiques et des panneaux photovoltaïques usuels, toutefois la conformation à panneaux de dimension petite où moyenne à long terme rendaient le toit perméable avec par conséquence une dégradation de la structure portante du toit, des pertes thermiques, une réduction de la capacité d'absorption et des coûts d'entretien majeurs.

La présente invention a pour but d'améliorer la conformation et le rendement du toit énergétique par rapport a tout ce qui est connu et en particulier par rapport à la solution objet du brevet **CH 619770 déposé par ce même inventeur.**

En se référant aussi aux développements théoriques et pratiques successifs dans ce secteur, la présente invention permet:
- une meilleure exploitation de l'énergie latente dans l'environnement tout proche soit pendant le jour soit pendant la nuit et aussi pendant les périodes froides.
- un meilleur aspect esthétique ce qui permet de l'utiliser aussi pour des toits à pans dans les centres historiques.
- un épargne économique et de temps soit pendant la fabrication, soit pendant le montage et l'exploitation avec par conséquence la possibilité d'un amortissement rapide de l'investissement.
- un entretien réduit et une plus longue durée dans le temps semblable à celle d'un toit traditionnel couvert par des tuiles.

L'invention est évidemment accouplée à une pompe à chaleur, technologie connue, à une petite centrale de distribution, elle aussi une technologie connue, et à une petite centrale électronique de commande et de régulation, elle aussi une technologie connue, qui permettent une exploitation optimale du toit énergétique.

**Une forme de réalisation** d'un toit énergétique selon la revendication 1 et suivantes est décrite en détail en se référant aux dessins ci-joints dont
- la **Fig. 1** représente une vue assonométrique d'un pan d'un toit énergétique
- la **Fig. 2** représente une coupe verticale du toit représenté dans la Fig. 1.

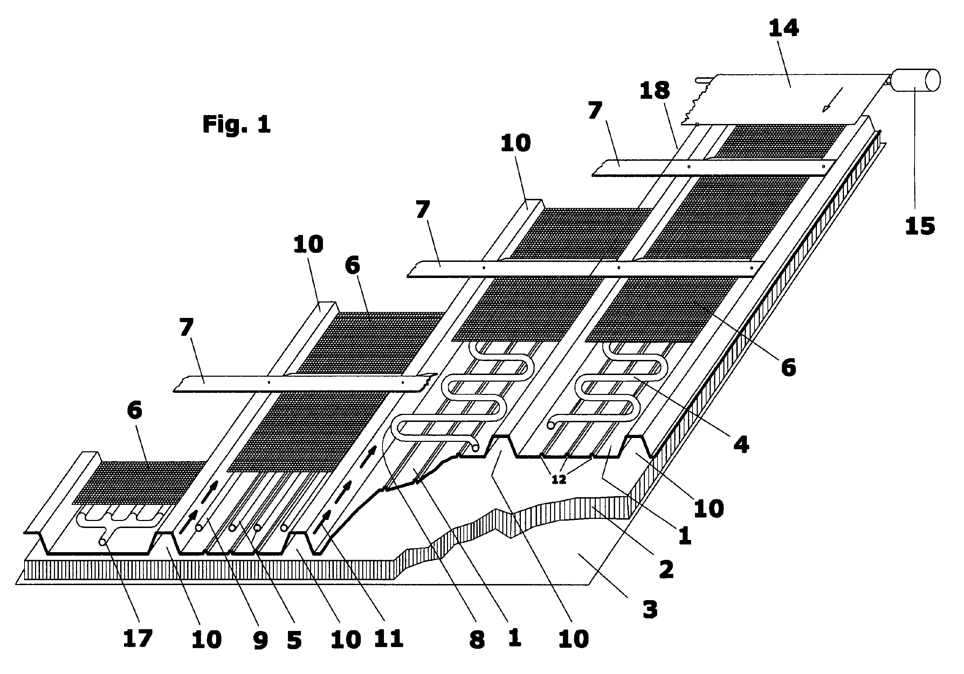

Sur la Fig. 1 (assonométrie) :
Avec **1** est indiquée la tôle nervurée du panneau de couverture, préférablement d'une couleur sombre, pourvu de grandes nervures 10 et de petites nervures 12.
Cette tôle peut-être métallique où de matériel synthétique avec une haute conductibilité thermique.

Avec **2** est indiquée l'isolation thermique cohibantée qui fonctionne comme une isolation thermique et phonique et empêche la formation d'eau de condensation sous le toit.

Avec **3** è indiqué la plaque imperméable placée au dessous et qui fonctionne aussi comme un frein pour la vapeur. Cette plaque pourrait-être métallique où de matériel synthétique rigide et peut former un ensemble avec la tôle nervurée 1 et l'isolation 2 de façon à former un panneau « Sandwich » cohibanté qui améliore l'isolation thermique et phonique. Cette conformation à "Sandwich" des éléments 1, 2 et 3 est déjà connue et représente un grand avantage pendant le montage qui par la suite est plus facile et rapide.

Avec **4** est indiqué le conduit tubulaire de absorption de la chaleur qui dans ce cas a la forme d'un serpentin appuyé et/où fixé directement sur la tôle nervurée 1 avec où sans petites nervures d'appui et/où des pièces de séparation. Dans certains points, par exemple au point 8, le conduit tubulaire se appuie et/où est fixé aussi sur la grande nervure 10. Le fait de se appuyer directement sur la tôle nervurée 1 permet au conduit tubulaire d'entrer en contact aussi avec l'eau de la pluie où avec l'eau de la neige fondante qui s'écoule sur la tôle nervurée 1, ce qui facilite l'extraction de l'énergie calorique. Dans le conduit tubulaire passe le fluide vecteur spécialement conçu pour résister aussi à des températures légèrement au dessous du zéro. Le conduit tubulaire est d'un matériel thermoconducteur, de préférence cuivre, aluminium où acier inox, de préférence d'une couleur sombre, avec une bonne résistance mécanique et aux influences atmosphériques.

Avec **5** est indiqué le conduit tubulaire de absorption de la chaleur que dans cette variante a la forme d'un groupe de tuyaux droits et rectilignes appuyés et/où fixés directement sur la tôle nervurée 1. Le point 9 représente un conduit tubulaire appuyé où fixé contre la grande nervure 10. Le conduit tubulaire est d'un matériel thermoconducteur, de préférence cuivre, aluminium où acier inox, de préférence d'une couleur sombre, avec une bonne résistance mécanique et aux influences atmosphériques. On peut prévoir que le où les tuyaux 5 soient fixé sur la tôle nervurée 1 déjà pendant la phase de fabrication de la tôle nervurée 1 où du panneau «Sandwich» décrit au point 3. On peut prévoir aussi que le conduit tubulaire prenne la forme d'un groupe de tuyaux 17 raccordés entre eux.

Avec **6** est indiquée la couverture de camouflage composée par un filet mince mais résistent, à maille relativement fine et de couleur sombre, préférablement de fibre de carbone, positionné entre les grandes nervures 10, au dessus des conduites tubulaires 4 et 5 mais au dessous des traverses 7. Le filet reste tendu par des ressorts fixés aux extrémités et peut s'appuyer directement sur les conduits tubulaires 4 et 5. Ce filet, en cachant les conduits tubulaires d'absorption 4 et 5, a la fonction de conférer à l'ensemble l'aspect d'un toit traditionnel couvert par de tuiles, en plus il permet le passage de l'air, de la pluie, etc. dont les conduits tubulaires 4 et 5 au dessous peuvent absorber la chaleur. En particulier l'eau de la pluie peut traverser la couverture 6 et mouiller les conduits tubulaires 4 et 5 et l'élément de couverture métallique 1 en facilitant ainsi l'absorption de la chaleur qui se trouve dans l'eau de la pluie. La couleur sombre permet d'absorber d'une façon optimale la chaleur solaire qui est ainsi transmise aux conduits tubulaires d'absorption 4 et 5 au dessous. En plus il a une fonction de protection mécanique des conduits tubulaires 4 et 5. Dans la phase exécutive, pour épargner où si elle n'est pas requise la couverture 6 peut aussi être omise. Dans ce cas les conduits tubulairs d'absorption 4 et 5 sont visibles mais l'expérience pratique a démontré que l'aspect esthétique est encore acceptable.

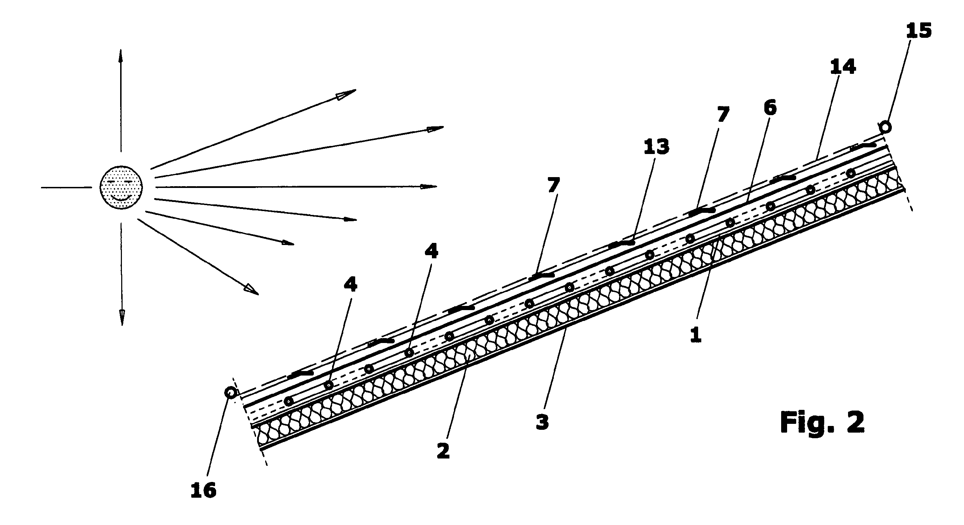

Avec **7** sont indiquées les traverses qui ont une fonction esthétique pour conférer à l'ensemble l'aspect d'un toit couvert par des tuiles traditionnelles et de fixer la couverture 6. En plus elles ont une fonction de protection mécanique des conduits tubulaires 4 et 5 et de la couverture 6 et elles doivent aussi empêcher le glissement de la neige le long du pan du toit. Pour cette raison les traverses 7 sont légèrement pliées envers le bas comme il est visible au point 13 sur la Fig. 2. Cette partie pliée (déflecteur) peut-être un élément appliqué, en outre elle sert pour raidir la traverse et comme appui pour le pied d'une personne qui doit accéder au toit. En plus le déflecteur 13 arrête le courent d'air chaud montant qui cour le long du pan du toit et accentue l'absorption de la chaleur de ce courant d'air. A ce but, en absence de la couverture 6, le déflecteur peut-être prolongé jusqu'à toucher les conduits tubulaires d'absorption 4 et 5. L'inclinaison du déflecteur est optimisée pour chaque cas selon l'inclinaison du pan du toit et de son exposition au soleil.

Avec **10** sont indiquées les grandes nervures, conformation caractéristique de ce genre de tôle profilée. Les nervures ne sont pas cohibantées mais vides. Les nervures servent comme élément de raidissage de la tôle et comme appui pour les traverses 7. Elles servent aussi comme appui pour les personnes qui montent sur le toit et comme conduit pour l'air qui en se réchauffant forme un courant d'air chaud montant qui toutefois reste enfermée dans la nervure car à l'extrémité supérieure la nervure est fermée. De cette façon les nervures agissent comme un réservoir de l'air chaud. Les nervures 10 ont aussi une fonction esthétique car, en combinaison avec les traverses 7, elles confèrent au toit énergétique l'aspect d'un toit usuel avec les tuiles.

Avec 11 sont dessinées les flèches qui indiquent le sens d'écoulement du courant montant d'air chaud qui se forme dans la nervure.

Avec 12 sont indiquées les petites nervures qui servent pur raidir la tôle nervurée 1 et pour y appuyer les conduites tubulaires d'absorption 4 et 5 de façon à les maintenir légèrement distanciées de la tôle nervurée 1. La présence de ces petites nervures n'est pas indispensable.

Avec 14 est indiquée la pellicule de couverture avec le rouleau horizontal motorisé 15 et un câble de guidage 18.

Dans la **Fig. 2** (coupe verticale) :
Avec **1** est indiquée la tôle nervurée du panneau de couverture
Avec **2** est indiquée l'isolation thermique cohibantée.
Avec **3** est indiquée la plaque imperméable placée au dessous.
Avec **4** est indiqué le conduit tubulaire d'absorption en forme de serpentin.
Avec **6** est indiquée la couverture de camouflage composée par un filet mince. Avec **7** sont indiquées les traverses.
Avec **13** est indiquée la partie pliée de la traverse 7 où "déflecteur'.
Avec **14** est indiquée une éventuelle pellicule de couverture enroulable qui peut être étendue sur le toit pour limiter la dispersion thermique en présence du vent. En soi même ce genre de couverture est connu parce qu'il est semblable à un store enroulable de protection contre le soleil, mais son utilisation comme couverture pour un toit énergique est inédit. La pellicule de couverture s'enroule sur un rouleau convenable 15 actionné par un moteur électrique et est entrainée le long des câbles de guidage qui s'enroulent sur un contre-rouleau 16 qui les garde tendus.

La couverture peut-être transparente, demi transparente où opaque, si nécessaire avec un dessin imitant un toit avec les tuiles où avec des pierres plates.

## Revendications

1. Toit énergétique à pans absorbant l'énergie solaire et la chaleur latente présente dans les éléments naturels comme la pluie, l'air, le vent, le brouillard, la neige, etc., **caractérisé en ce que**
il est composé par un où plusieurs panneaux à "sandwich" de couverture composés par une tôle nervurée de préférence métallique (1) et une plaque (3) de préférence métallique où de matériel synthétique rigide à haute conductivité thermique, enfermant entre les deux une couche de matériel thermo-isolant (2), et par un ou plusieurs conduits tubulaires (4) (5) dans lesquels coule un fluide thermovecteur, positionnées sur la tôle nervurée (1) et rangées entre les grandes nervures (10) de façon qu'elles soient exposées tout-le-temps au soleil et à la chaleur latente.

2. Toit énergétique selon la revendication 1, **caractérisé en ce que** la tôle nervurée (1) a une où plusieurs grandes nervures (10) disposées dans le sens du penchant du pan et dans lesquelles peut pénétrer et circuler l'air (11) et peut avoir une où plusieurs petites nervures (12) rangées entre les grandes nervures (10) mentionnées ci dessus.

3. Toit énergétique selon la revendication 1, **caractérisé en ce que** entre les grandes nervures (10) mais au dessus du où des conduits tubulaires (4) (5) est placé un filet à maille fine (6), de couleur sombre et tendu par des ressorts.

4. Toit énergétique selon la revendication 1, **caractérisé en ce que** un, plusieurs où tous les composants du toit énergétique sont de couleur sombre.

5. Toit énergétique selon la revendication 1, **caractérisé en ce que** le où les conduits tubulaires (4) (5) sont de matériel à haute conductibilité thermique, de préférence de cuivre, de aluminium où d'acier.

6. Toit énergétique selon la revendication 1, **caractérisé en ce que** le où les conduits tubulaires sont linéaires (5) et rangés parallèlement aux nervures (10) singulièrement (5) où groupés (16), où bien ils ont la forme d'un serpentin (4).

7. Toit énergétique selon la revendication 1, **caractérisé en ce que** le où les i conduits tubulaires (4) (5) sont appuyés (8) (9) aux grandes nervures (10) et/où ils sont appuyées sur les petites nervures (12) de la tôle nervurée (1).

8. Toit énergétique selon les revendications 1 et 2, **caractérisé en ce que** au dessus des grandes nervures (10) et perpendiculairement à celles-ci il y a des traverses (7).

9. Toit énergétique selon les revendications 1 et 8, **caractérisé en ce que** les traverses (7) ont une partie saillante "déflecteur" (13) pliée vers le bas pour retenir l'air chaud montant et pour servir comme appui et pare-neige.

10. Toit énergétique selon la revendication 1, **caractérisé en ce que** tout le toit énergétique peut être couvert par une pellicule de couverture rétractile, (14) flexible, transparente où demi transparente, opaque où colorée, enroulable sur des rouleaux adaptes (15) et glissante le long de câbles de guidage (18) étendus sur le toit et qui s'enroulent sur un contre-rouleau inférieur (16) qui les garde tendus.
